# EUROPEAN PATENT APPLICATION

(11) **EP 3 993 451 A1**
(43) Date of publication of application: **04.05.2022**
(21) Application number: 20840198.4
(22) Date of filing: 16.07.2020
(51) Int. Cl.: H04W 4/02, H04W 64/00

(54) **METHOD FOR POSITIONING AND COMMUNICATION APPARATUS**

(30) Priority: 16.07.2019 CN 201910639654
(71) Applicant: Huawei Technologies Co., Ltd., Longgang Shenzhen, Guangdong 518129 (CN)
(72) Inventor: SHI, Zhenyu, Shenzhen, Guangdong 518129 (CN); CHEN, Lei, Shenzhen, Guangdong 518129 (CN)
(74) Representative: Isarpatent
(86) International application number: PCT/CN2020/102351
(87) International publication number: WO 2021/008581

(57) **Abstract**

This application provides a positioning method and a communication apparatus. When reporting, to a network device, measurement information of a plurality of paths that is obtained through positioning measurement, a terminal device associates each path with a positioning reference signal PRS resource identifier or related information of a beam (for example, an angle of a transmit beam or a direction of the transmit beam) corresponding to the PRS resource identifier. While learning of the measurement information of each path, the network device can further learn of information about a beam corresponding to the path. This helps the network device improve positioning accuracy.

## Description

This application claims priority to Chinese Patent Application No. 201910639654.1, filed with the China National Intellectual Property Administration on July 16, 2019 and entitled "POSITIONING METHOD AND COMMUNICATION APPARATUS", which is incorporated herein by reference in its entirety.

### TECHNICAL FIELD

This application relates to the field of wireless communication technologies, and more specifically, to a positioning method and a communication apparatus.

### BACKGROUND

Since an early long term evolution (long term evolution, LTE) release, positioning exists as an important feature of wireless communication in the 3rd generation partnership project (3rd generation partnership project, 3GPP). In an open outdoor scenario, positioning can be performed by using a global positioning system (global positioning system, GPS) technology to meet a requirement of position accuracy within tens of meters. However, in indoor or complex urban areas, a positioning effect of a GPS is not very ideal. With evolution of 5G technologies, more scenarios need to be considered, such as a drone and the Internet of Things. Emergence of these new scenarios imposes higher requirements on indicators such as positioning accuracy and a latency. Currently, the 3GPP release 16 (release 16) requires that positioning accuracy reaches a meter level. However, positioning accuracy in earlier releases can only reach about 30 meters, which still falls short of a 5G requirement.

Because beams (beams) exist in new radio (new radio, NR), received powers of paths on different beams also vary greatly. Consequently, positioning accuracy of a network device is relatively low, and cannot meet the 5G requirement.

### SUMMARY

This application provides a positioning method and a communication apparatus, to improve positioning accuracy.

According to a first aspect, this application provides a positioning method. The method includes:
measuring a positioning reference signal PRS to obtain a relative time difference between a plurality of paths; and
sending measurement information of the plurality of paths to a network device, where the measurement information includes the relative time difference between the plurality of paths and one or more of the following information: one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

In the technical solution of this application, UE associates each reported path with the PRS resource identifier, and/or associates each path with related information of a transmit beam used to send the PRS in a cell involved in positioning, so that the network device can learn of beam information corresponding to each path while learning of the relative time difference between the plurality of paths. This helps the network device improve positioning accuracy.

With reference to the first aspect, in some implementations of the first aspect, the method includes: receiving a positioning information request from the network device, where the positioning information request carries indication information, and the indication information is used to indicate a terminal device to report the relative time difference between the plurality of paths and the one or more PRS resource identifiers.

According to a second aspect, this application provides a positioning method. The method includes: receiving measurement information of a plurality of paths from a terminal device, where the measurement information includes a relative time difference between the plurality of paths and one or more of the following information: one or more PRS resource identifiers, a direction of a horizontal angle of a transmit beam of a PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS; and performing positioning on the terminal device based on the measurement information.

With reference to the second aspect, in some implementations of the second aspect, before a network device receives the measurement information of the plurality of paths from the terminal device, the method further includes: sending a positioning information request to the terminal device, where the positioning information request carries indication information, and the indication information is used to indicate the terminal device to report the relative time difference between the plurality of paths and the one or more PRS resource identifiers.

The methods in the first aspect and the second aspect are applicable to a positioning architecture in an OTDOA scenario.

According to a third aspect, this application further provides a positioning method. The method includes:
measuring a positioning reference signal PRS to obtain a time difference between receiving and sending performed by UE on a plurality of paths; and sending measurement information of the plurality of paths to a network device,
where the measurement information includes the time difference between the receiving and sending performed by the UE on the plurality of paths and one or more of the following information: one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

In the technical solution of this application, the UE associates each reported path with the PRS resource identifier, and/or associates each path with related information of a transmit beam used to send the PRS in a cell involved in positioning, so that the network device can learn of beam information corresponding to each path while learning of the time difference between the receiving and sending performed by the UE on the plurality of paths. This helps the network device improve positioning accuracy.

With reference to the third aspect, in some implementations of the third aspect, the method includes: receiving a positioning information request from the network device, where the positioning information request carries indication information, and the indication information is used to indicate a terminal device to report the time difference between the receiving and sending performed by the UE on the plurality of paths and the one or more PRS resource identifiers.

According to a fourth aspect, this application provides a positioning method. The method includes: receiving measurement information of a plurality of paths from a terminal device, where the measurement information includes a time difference between receiving and sending performed by UE on the plurality of paths and one or more of the following information: one or more PRS resource identifiers, a direction of a horizontal angle of a transmit beam of a PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS; and performing positioning on the terminal device based on the measurement information.

With reference to the fourth aspect, in some implementations of the fourth aspect, before a network device receives the measurement information of the plurality of paths from the terminal device, the method further includes: sending a positioning information request to the terminal device, where the positioning information request carries indication information, and the indication information is used to indicate the terminal device to report the time difference between the receiving and sending performed by the UE on the plurality of paths and the one or more PRS resource identifiers.

The methods in the third aspect and the fourth aspect are applicable to a positioning architecture in an E-CID or a multi-RTT scenario.

In the method according to any one of the first aspect to the fourth aspect or the possible implementations of the first aspect to the fourth aspect, each path in the plurality of paths is associated with one or more PRS resource identifiers.

In the method according to any one of the first aspect to the fourth aspect or the possible implementations of the first aspect to the fourth aspect, when a first path in the plurality of paths is associated with one PRS resource identifier, the PRS resource identifier is used to indicate that an RSRP or RSRQ that is of the first path and that is measured on a beam corresponding to the PRS resource identifier is the largest, where the first path is any one of the plurality of paths.

In the method according to any one of the first aspect to the fourth aspect or the possible implementations of the first aspect to the fourth aspect, when a second path in the plurality of paths is associated with a plurality of PRS resource identifiers, the PRS resource identifiers are used to indicate that RSRPs or RSRQ of the second path that are/is measured on beams corresponding to the plurality of PRS resource identifiers are/is larger than an RSRP or RSRQ measured on another beam, where the second path is any one of the plurality of paths.

The UE associates each reported path with information about one or more transmit beams having a largest RSRP or largest RSRQ or with a PRS resource identifier corresponding to the beam, to help the network device improve positioning accuracy.

According to a fifth aspect, this application provides a communication apparatus. The communication apparatus has a function of implementing the method according to any one of the first aspect or the possible implementations of the first aspect, or the communication apparatus has a function of implementing the method according to any one of the third aspect or the possible implementations of the third aspect. The function may be implemented by hardware, or may be implemented by hardware executing corresponding software. The hardware or the software includes one or more units corresponding to the foregoing functions.

According to a sixth aspect, this application provides a communication apparatus. The communication apparatus has a function of implementing the method according to any one of the second aspect or the possible implementations of the second aspect, or the communication apparatus has a function of implementing the method according to any one of the fourth aspect or the possible implementations of the fourth aspect. The function may be implemented by hardware, or may be implemented by hardware executing corresponding software. The hardware or the software includes one or more units corresponding to the foregoing functions.

According to a seventh aspect, this application provides a terminal device, including a processor and a memory. The memory is configured to store a computer program, and the processor is configured to invoke and run the computer program stored in the memory, so that the terminal device performs the method according to any one of the first aspect or the possible implementations of the first aspect, or performs the method according to any one of the third aspect or the possible implementations of the third aspect.

According to an eighth aspect, this application provides a network device, including a processor and a memory. The memory is configured to store a computer program, and the processor is configured to invoke and run the computer program stored in the memory, so that the network device performs the method according to any one of the first aspect or the possible implementations of the first aspect, or performs the method according to any one of the fourth aspect or the possible implementations of the fourth aspect.

According to a ninth aspect, this application provides a computer-readable storage medium. The computer-readable storage medium stores computer instructions; and when the computer instructions are run on a computer, the computer is enabled to perform the method according to any one of the first aspect or the possible implementations of the first aspect, or perform the method according to any one of the third aspect or the possible implementations of the third aspect.

According to a tenth aspect, this application provides a computer-readable storage medium. The computer-readable storage medium stores computer instructions; and when the computer instructions are run on a computer, the computer is enabled to perform the method according to any one of the second aspect or the possible implementations of the second aspect, or perform the method according to any one of the fourth aspect or the possible implementations of the fourth aspect.

According to an eleventh aspect, this application provides a chip, including a processor. The processor is configured to read and execute a computer program stored in a memory, to perform the method according to any one of the first aspect or the possible implementations of the first aspect, or perform the method according to any one of the third aspect or the possible implementations of the third aspect.

Optionally, the chip further includes the memory, and the processor is connected to the memory by using a circuit or a wire.

Further, optionally, the chip further includes a communication interface.

According to a twelfth aspect, this application provides a chip, including a processor. The processor is configured to read and execute a computer program stored in a memory, to perform the method according to any one of the second aspect or the possible implementations of the second aspect, or perform the method according to any one of the fourth aspect or the possible implementations of the fourth aspect.

Optionally, the chip further includes the memory, and the processor is connected to the memory by using a circuit or a wire.

Further, optionally, the chip further includes a communication interface.

According to a thirteenth aspect, this application provides a computer program product. The computer program product includes computer program code; and when the computer program code is run on a computer, the computer is enabled to perform the method according to any one of the first aspect or the possible implementations of the first aspect, or perform the method according to any one of the third aspect or the possible implementations of the third aspect.

According to a fourteenth aspect, this application provides a computer program product. The computer program product includes computer program code; and when the computer program code is run on a computer, the computer is enabled to perform the method according to any one of the second aspect or the possible implementations of the second aspect, or perform the method according to any one of the fourth aspect or the possible implementations of the fourth aspect.

According to a fifteenth aspect, this application provides a communication system. The communication system includes the communication apparatus according to the fifth aspect and the communication apparatus according to the sixth aspect.

### BRIEF DESCRIPTION OF DRAWINGS

FIG. 1 shows an example of a communication system to which an embodiment of this application is applicable;
FIG. 2 is a schematic diagram of signal received power of a plurality of paths in a multi-beam scenario;
FIG. 3 is a flowchart of a positioning method according to this application;
FIG. 4 shows an example of a positioning method according to this application;
FIG. 5 shows another example of a positioning method according to this application;
FIG. 6 is a schematic block diagram of a communication apparatus 600 according to this application;
FIG. 7 is a schematic block diagram of a communication apparatus 700 according to this application;
FIG. 8 is a schematic diagram of a structure of a communication device 800 according to this application; and
FIG. 9 is a schematic diagram of a structure of a communication device 900 according to this application.

### DESCRIPTION OF EMBODIMENTS

The following describes technical solutions of this application with reference to accompanying drawings.

The technical solutions of this application are applicable to a scenario in which positioning needs to be performed on a terminal device. For example, the technical solutions are applicable to a scenario in which an observed time difference of arrival (observed time difference of arrival, OTDOA) technology, an enhanced cell identification (enhanced cell identification, E-CID) technology, or a multi-round-trip time (multi-round-trip time, multi-RTT) technology is used.

In addition, the technical solutions in embodiments of this application are applicable to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) system, the Internet of Vehicles, or the Internet of Things.

The terminal device in the embodiments of this application may be user equipment, an access terminal, a subscriber unit, a subscriber station, a mobile station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in this application.

A network device in the embodiments of this application is a device having a positioning function, and may be a core network device, or may be an access network device. For example, the network device having the positioning function may be a location management function (location management function, LMF) of a core network. In the following embodiments, the LMF is used as an example for description.

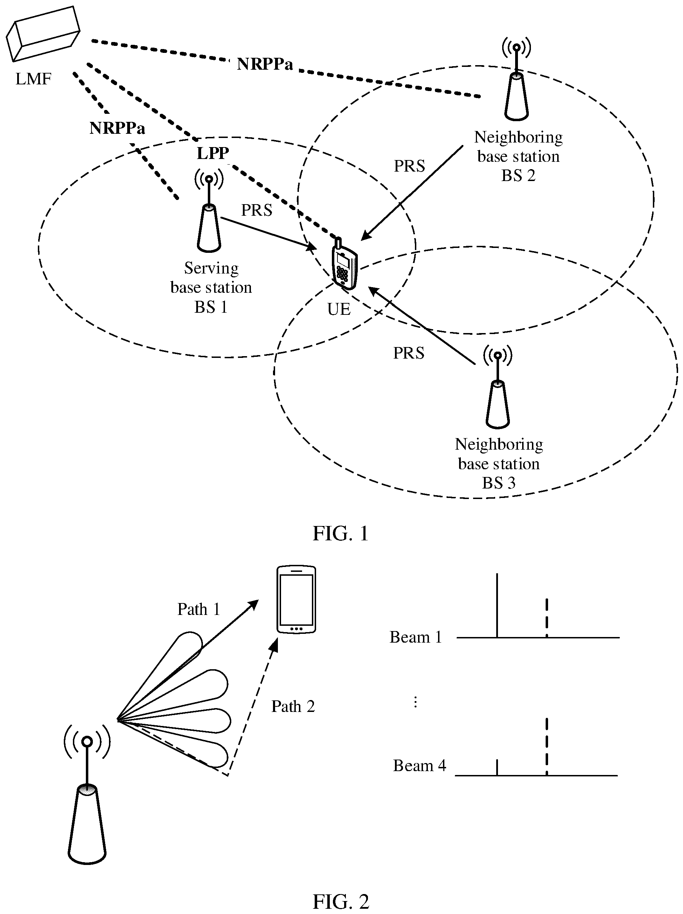

FIG. 1 shows an example of a communication system to which an embodiment of this application is applicable. An example in which a terminal device is UE is used. As shown in FIG. 1, when an LMF needs to perform positioning on the UE, a plurality of network devices (for example, a base station (base station, BS) or a transmission reception point (Transmission Reception Point, TRP), where the following uses the BS as an example) send positioning reference signals (positioning reference signals, PRSs) to the UE. The plurality of BSs include a BS serving a serving cell of the UE and a BS serving one or more neighboring cells of the serving cell. The base station serving the serving cell is a BS 1 shown in FIG. 1. The base stations serving the neighboring cells are a BS 2 and a BS 3 shown in FIG. 1. The UE measures the PRSs sent by the BS serving the serving cell and the BSs serving the neighboring cells, to obtain measurement information of a plurality of paths (also referred to as a plurality of paths for short). The measurement information includes at least a relative time difference between the plurality of paths. Then, the UE reports the measurement information of the plurality of paths to the LMF by using an LTE positioning protocol (LTE positioning protocol, LPP). The LMF performs positioning on the UE based on the measurement information reported by the UE.

In addition, as shown in FIG. 1, the LMF communicates with the BS by using an additional new radio positioning protocol A (NR positioning protocol A, NRPPa) protocol. The LMF communicates with the UE by using the LTE positioning protocol (LTE positioning protocol, LPP) protocol. The LMF exchanges cell information, for example, PRS configuration information of the cell, timing information of the cell, and geographical location information of the cell, with the BS by using the NRPPa protocol. The information and the measurement information reported by the terminal device are jointly used by the LMF to perform positioning on the terminal device.

It should be noted that the architecture of the communication system shown in FIG. 1 is merely used as an example, and other architectures may alternatively be used. For example, FIG. 1 shows the base station BS 1 serving the serving cell and the base stations BS 2 and BS 3 serving two neighboring cells. It is clear that the communication system may alternatively include base stations that serve more neighboring cells and that are configured to send PRSs for the UE to perform positioning measurement.

In addition, the technical solutions of this application may be further applicable to a scenario in which only a base station serving a serving cell is included, namely, a single-site scenario, and a scenario in which a base station serving a serving cell and a base station serving one neighboring cell are included. In these scenarios, UE performs positioning measurement on three or more paths and reports measurement information to a network device, and the network device may also implement positioning on the UE.

Because beams (beams) exist in NR, signal received powers on different beams vary greatly. The following provides description with reference to FIG. 2.

FIG. 2 is a schematic diagram of signal received power of a plurality of paths in a multi-beam scenario. As shown in FIG. 2, it is assumed that a base station serving a serving cell in which UE is located generates four beams, which are represented as a beam 1, a beam 2, a beam 3, and a beam 4. When the UE performs positioning measurement, the UE measures PRSs sent by the BS serving the serving cell and a BS serving a neighboring cell. As shown in FIG. 2, for the BS serving the serving cell, the PRS is sent by using four beams. Angles and directions for transmitting the PRS are different on different beams, and strength of the signal received by the UE from different beams is also different. As shown in FIG. 2, a path 1 is a line-of-sight path, and a path 2 is a non-line-of-sight path (for example, may be a reflection path). Reference signal received powers (reference signal received powers, RSRPs) of the path 1 that are measured by the UE on different beams are different. For example, an RSRP measured on the beam 1 is larger, and an RSRP measured on the beam 4 is smaller, where the beam 2 and the beam 3 are not shown. For another example, the UE measures RSRPs of the path 2 on different beams, and an RSRP measured on the beam 1 is smaller than an RSRP measured on the beam 2.

After the UE reports a measured relative time difference (relative time difference) of a plurality of paths to a network device, the network device determines paths, where a relative time difference between the paths is to be used to perform positioning on the UE. Actually, it is difficult for the network device to determine which paths are line-of-sight paths. As a result, positioning accuracy is limited.

It should be understood that, for explanation of the relative time difference in this application, refer to a definition in a standard. For example, the relative time difference is defined in the 3GPP 36.355 as follows:

This field specifies the additional detected path timing relative to the detected path timing used for the RSTD value in units of 0.5 Ts, with Ts=1/(15000×2048) seconds. A positive value indicates that the particular path is later in time than the detected path used for RSTD; a negative value indicates that the particular path is earlier in time than the detected path used for RSTD.

Therefore, this application provides a positioning method, to provide measured beam information (for example, an angle of a transmit beam and a direction of the transmit beam) of each path for a network device to help the network device perform positioning on UE, to improve positioning accuracy.

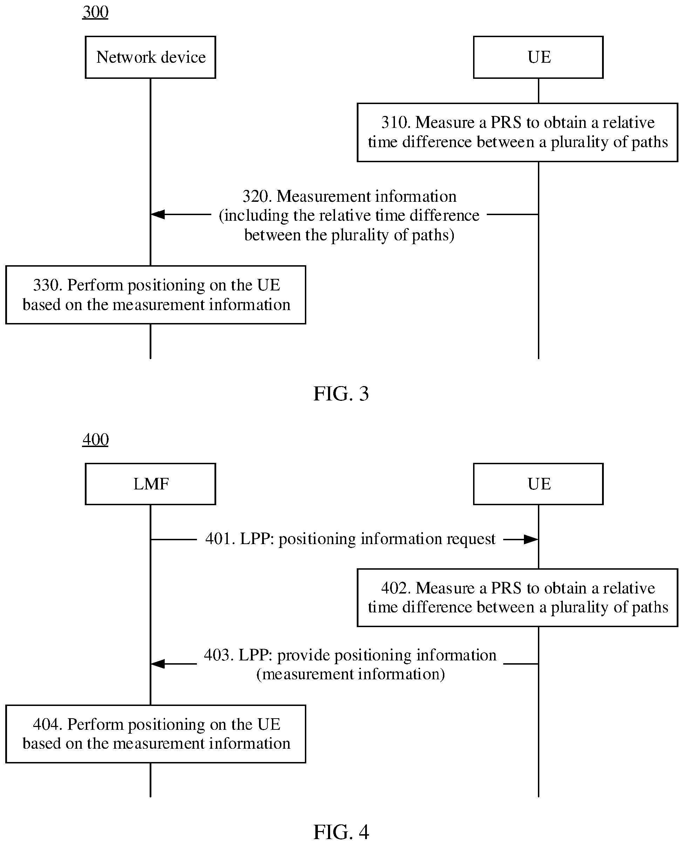

With reference to FIG. 3, the following uses an OTDOA scenario as an example to describe the positioning method provided in this application.

FIG. 3 is a flowchart of a positioning method according to this application.

310. A terminal device measures a PRS to obtain a relative time difference between a plurality of paths.

The relative time difference between the plurality of paths may be a time difference of a first-arrival path of a serving cell relative to a first-arrival path of a neighboring cell, a time difference of another path of a serving cell relative to a first-arrival path of the serving cell, or a time difference of another path of a neighboring cell relative to a first-arrival path of the neighboring cell.

The first-arrival path of the serving cell is a path that is first detected by UE in the serving cell. The first-arrival path of the neighboring cell is a path that is first detected by the UE in the neighboring cell. The first-arrival path of the serving cell is used as a reference path of the another path of the serving cell, and the first-arrival path of the neighboring cell is used as a reference path of the another path of the neighboring cell, so that the relative time difference between the plurality of paths can be obtained through calculation.

It should be understood that the time difference between the first-arrival path of the serving cell and the first-arrival path of the neighboring cell is also referred to as a reference signal time difference (reference signal time difference, RSTD).

In addition, the PRS measured by the terminal device includes PRSs of all cells involved in positioning, for example, a PRS of the serving cell and a PRS of one or more neighboring cells. Therefore, the plurality of paths not only include a path from the serving cell to the terminal device but also include a path from the neighboring cell involved in positioning to the terminal device.

320. The terminal device reports measurement information of the plurality of paths to a network device.

Correspondingly, the network device receives the measurement information of the plurality of paths from the terminal device.

The measurement information includes the relative time difference between the plurality of paths and one or more of the following information:
one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

Alternatively, the foregoing description may be expressed as:

Each path in the plurality of paths is associated with one or more PRS resource identifiers, and/or each path in the plurality of paths is associated with one or more of the following information:
a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier (identifier, ID) of the transmit beam of the PRS, and a mode of the transmit beam of the PRS.

It may be understood that the UE associates each measured path with related information of the transmit beam, for example, a direction of the transmit beam, an angle of the transmit beam, or the mode of the transmit beam. This helps the network device improve positioning accuracy.

In an implementation, measurement information that is of the path of the serving cell and that is measured by the UE may be reported by using a field in an OTDOA-SignalMeasurementInformation IE. Measurement information that is of the path of the neighboring cell and that is measured by the UE may be reported by using a field in a NeighbourMeasurement IE.

For example, when a path is associated with one PRS resource identifier, the OTDOA-SignalMeasurementInformation IE may carry measurement information based on a structure of AdditionalPath in TR36355. The structure of AdditionalPath may be as follows: 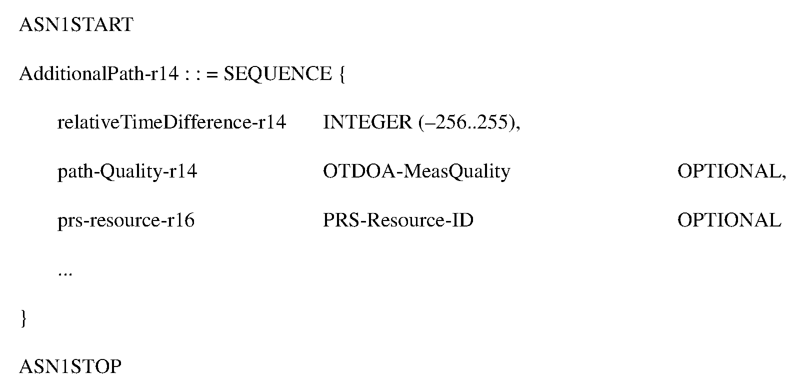 relativeTimeDifference indicates a relative time difference of the path relative to the reference path; path-Quality indicates path quality of the path; and prs-resource indicates a PRS resource associated with the path, and is identified by using PRS-Resource-ID.

For another example, when a path is associated with a plurality of PRS resource identifiers, a structure of AdditionalPath may be as follows: 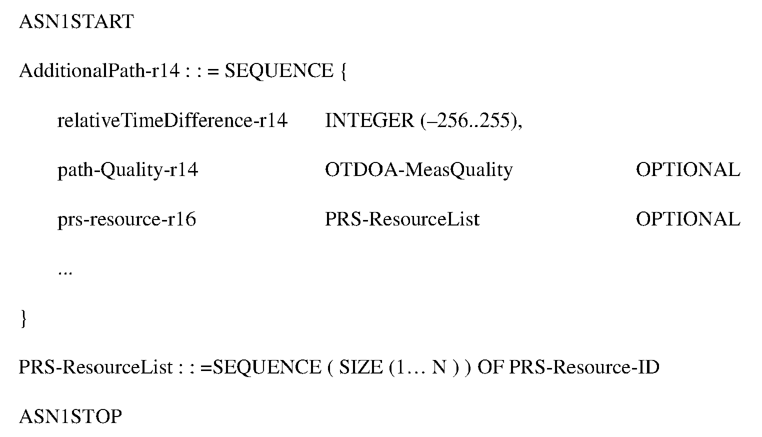 relativeTimeDifference indicates a relative time difference of the path relative to the reference path; path-Quality indicates path quality of the path; prs-resource indicates a PRS resource associated with the path, and is identified by using PRS-ResourceList; and PRS-ResourceList includes a plurality of PRS resource IDs.

It should be noted that a beam corresponds one-to-one to a PRS resource ID. When a path is associated with an identifier of a PRS resource or some PRS resources, it indicates that the path also corresponds one-to-one to a beam corresponding to the PRS resource identifier.

In an implementation, each path in the plurality of paths reported by the UE is associated with one PRS resource identifier, or each path may be associated with a plurality of PRS resource identifiers. Further, when each path is associated with the plurality of PRS resource identifiers, quantities of PRS resource identifiers associated with different paths may be different or the same. This is not limited herein.

When a path is associated with a plurality of PRS resource identifiers, it may also be considered that the path is associated with a PRS resource identifier list.

In another implementation, a part of the plurality of paths may be associated with only one PRS resource identifier while the other part of the paths may be associated with a plurality of PRS resource identifiers.

Optionally, when a path in the plurality of paths is associated with one PRS resource identifier, it indicates that an RSRP or RSRQ that is of the path and that is measured by the UE on a beam corresponding to the PRS resource identifier is the largest.

For example, when a first path in the plurality of paths is associated with one PRS resource identifier, the PRS resource identifier is used to indicate that an RSRP or RSRQ that is of the first path and that is measured on a beam corresponding to the PRS resource identifier is the largest. The first path may be any one of the plurality of paths.

Optionally, when a path in the plurality of paths is associated with one PRS resource identifier, it may alternatively indicate that an RSRP or RSRQ measured by the UE on a beam corresponding to the PRS resource identifier is larger, but not necessarily the largest.

Similarly, when a path in the plurality of paths is associated with a plurality of PRS resource identifiers, it indicates that RSRPs or RSRQ measured by the UE on beams corresponding to the plurality of PRS resource identifiers are the largest.

In other words, when a second path in the plurality of paths is associated with a plurality of PRS resource identifiers, it indicates that RSRPs or RSRQ of the second path that are/is measured on beams corresponding to the plurality of PRS resource identifiers are/is larger than an RSRP or RSRQ measured on another beam.

Similarly, when a path in the plurality of paths is associated with a plurality of PRS resource identifiers, it may alternatively indicate that RSRPs or RSRQ of the path that are/is measured on beams corresponding to the plurality of PRS resource identifiers are/is larger, but not necessarily the largest.

It should be understood that the foregoing "largest" and "larger" are used when the UE compares an RSRP or RSRQ measured on a beam corresponding to the one or more PRS resource identifiers with RSRPs or RSRQ measured on all transmit beams used by the network device to send the PRS. In other words, RSRPs or RSRQ of each path that are/is measured on different transmit beams are/is different.

330. The network device performs positioning on the UE based on the measurement information of the plurality of paths that is reported by the UE.

It should be understood that the UE associates each reported path with the PRS resource identifier, or associates each path with related information of the transmit beam used to send the PRS in the cell involved in positioning, so that the network device can learn of beam information corresponding to the path while learning of the relative time difference between the plurality of paths. This helps the network device improve positioning accuracy.

Optionally, before step 310, the method 300 may further include step 340.

340. The network device sends a positioning information request to the UE. The positioning information request is used to request the UE to perform positioning measurement.

Correspondingly, the UE receives the positioning information request from the network device.

Further, the UE performs step 310 based on the positioning information request.

Optionally, the positioning information request carries indication information, and the indication information is used to indicate the UE to report the relative time difference between the plurality of paths and the one or more PRS resource identifiers.

In other words, the indication information carried in the positioning information request is used to indicate the UE to associate each path in the reported plurality of paths with the PRS resource identifier.

In this embodiment of this application, the UE may associate each path with the PRS resource identifier when reporting the relative time difference between the plurality of paths based on the indication information in the positioning information request. Alternatively, the positioning information request sent by the network device to the UE may not carry the indication information. The UE measures, based on the positioning information request, the PRS of the cell involved in positioning, associates, by default, the measured relative time difference of the plurality of paths with the PRS resource identifier, and reports an association relationship.

Optionally, the indication information may be included in an information element CommonIEsRequestLocationInformation, and one bit is used to indicate whether to associate the PRS resource identifier when the relative time difference between the plurality of paths is reported.

For example, 1 indicates to associate the PRS resource identifier when the relative time difference between the plurality of paths is reported, and 0 indicates not to associate the PRS resource identifier when the relative time difference between the plurality of paths is reported.

The following uses an example to describe the positioning method provided in this application. The following uses an example in which the network device is an LMF for description, but the network device may alternatively be another device that can perform positioning on the UE.

FIG. 4 shows an example of a positioning method according to this application.

401. An LMF sends a positioning information request to UE by using an LPP.

Correspondingly, the UE receives the positioning information request from the LMF.

Optionally, the positioning information request sent by the LMF to the UE may carry indication information.

The indication information herein is used to indicate the UE to report a relative time difference between a plurality of paths and one or more PRS resource identifiers.

402. The UE measures a PRS of a cell involved in positioning, to obtain the relative time difference between the plurality of paths.

403. The UE sends, to the LMF by using the LPP, measurement information of the plurality of paths that is obtained through measurement.

For description of the measurement information, refer to the foregoing step 320. Details are not described herein again.

404. The LMF performs positioning on the UE based on the measurement information.

In an existing procedure, UE reports only a relative time difference between a plurality of paths. However, in this method, when receiving the relative time difference between the plurality of paths, the LMF can further obtain beam information of a transmit beam that has a largest RSRP or largest RSRQ and that is associated with each path in the plurality of paths, to help improve positioning accuracy.

With reference to FIG. 3 and FIG. 4, the foregoing describes an application of the positioning method provided in this application to the OTDOA scenario. The following further describes an application of the positioning method to an E-CID or multi-RTT scenario by using an example.

In the E-CID or multi-RTT scenario, UE measures a PRS of a cell involved in positioning, and reports, to a network device, a time difference between receiving and sending performed by the UE on a plurality of paths, that is, the UE reports a UE RxTx time difference between the plurality of paths to the network device. The network device performs positioning on the UE based on the UE RxTx time difference that is reported by the UE.

The UE RxTx time difference commonly means a time difference between a time point at which the UE receives the first downlink reference signal and a time point at which the UE sends an uplink reference signal.

In addition, in this embodiment of this application, the UE RxTx time difference may alternatively represent a path-level UE RxTx time difference. Different from the common meaning of the UE RxTx time difference, the path-level UE RxTx time difference is used to indicate a time difference between a time point at which the UE receives a downlink reference signal on each path and a time point at which the UE sends an uplink reference signal on the path.

Optionally, the path-level UE RxTx time difference may be at a second level, a slot (slot) level, or a symbol (symbol) level. This is not limited herein.

In the E-CID or multi-RTT scenario, the UE further reports one or more of the following information while reporting the UE RxTx time difference between the plurality of paths to the network device:
one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

In other words, the UE RxTx time difference is associated with one or more of the foregoing information. For example, the UE RxTx time difference is associated with the one or more PRS resource identifiers.

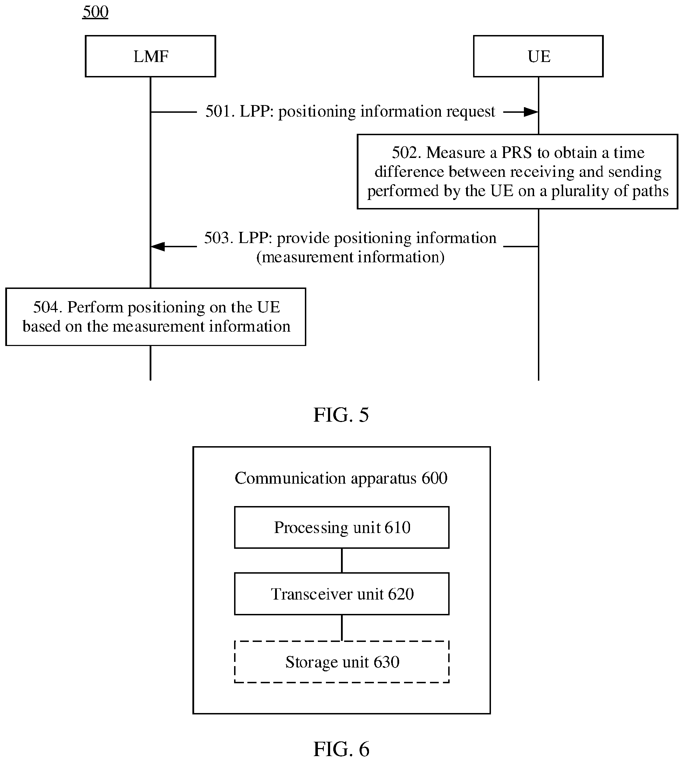

FIG. 5 shows an example of a positioning method according to this application.

501. An LMF sends a positioning information request to UE by using an LPP.

Correspondingly, the UE receives the positioning information request from the LMF.

Optionally, the positioning information request sent by the LMF to the UE may carry indication information.

The indication information herein is used to indicate the UE to report a UE RxTx time difference between a plurality of paths and one or more PRS resource identifiers.

502. The UE measures a PRS of a cell involved in positioning, to obtain the UE RxTx time difference between the plurality of paths.

503. The UE sends, to the LMF by using the LPP, measurement information of the plurality of paths that is obtained through measurement.

The measurement information includes the UE RxTx time difference between the plurality of paths and one or more of the following information: one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

504. The LMF performs positioning on the UE based on the measurement information.

It should be noted that the positioning information request in step 501 may alternatively not carry the indication information. After receiving the positioning information request, the UE measures the PRS of the cell involved in positioning, and reports the UE RxTx time difference between the plurality of paths and the one or more PRS resource identifiers by default.

Optionally, when a first path in the plurality of paths is associated with one PRS resource identifier, the PRS resource identifier is used to indicate that an RSRP or RSRQ that is of the first path and that is measured on a beam corresponding to the PRS resource identifier is larger than an RSRP or RSRQ measured on another beam.

Optionally, when a second path in the plurality of paths is associated with a plurality of PRS resource identifiers, the plurality of PRS resource identifiers are used to indicate that RSRPs or RSRQ of the second path that are/is measured on beams corresponding to the plurality of PRS resource identifiers are/is larger than an RSRP or RSRQ measured on another beam.

In addition, another implementation in the OTDOA scenario is also applicable to the E-CID or multi-RTT scenario. Details are not described herein again.

The foregoing describes in detail the positioning method in the embodiments of this application. The following describes a positioning communication apparatus provided in this application.

FIG. 6 is a schematic block diagram of a communication apparatus 600 according to this application. As shown in FIG. 6, a communication apparatus 500 includes a processing unit 610 and a transceiver unit 620.

The processing unit 610 is configured to measure a positioning reference signal PRS to obtain a relative time difference between a plurality of paths.

The transceiver unit 620 is configured to send measurement information of the plurality of paths to a network device, where the measurement information includes the relative time difference between the plurality of paths and one or more of the following information: one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

Optionally, the transceiver unit 620 is further configured to receive a positioning information request from the network device, where the positioning information request carries indication information, and the indication information is used to indicate a terminal device to report the relative time difference between the plurality of paths and the one or more PRS resource identifiers.

Optionally, the transceiver unit 620 may alternatively be replaced with a receiving unit and/or a sending unit.

For example, the transceiver unit 620 may be replaced with the receiving unit when performing a receiving step. The transceiver unit 620 may be replaced with the sending unit when performing a sending step.

Optionally, the communication apparatus 600 may further include a storage unit 630, configured to store a computer program executed by the processing unit 610.

In an implementation, the communication apparatus 600 may be the terminal device in the method embodiments. In this implementation, the transceiver unit 620 may be a transceiver. The transceiver may include a receiver and a transmitter, and has both receiving and transmitting functions. The processing unit 610 may be a processor. The storage unit 630 may be a memory, and is configured to store the computer program. The processing unit 610 executes the computer program stored in the storage unit 630, so that the communication apparatus 600 performs operations and/or processing performed by the network device in the method embodiments.

In another implementation, the communication apparatus 600 may be a chip installed in the terminal device. In this implementation, the transceiver unit 620 may be a communication interface or an interface circuit. The communication interface may specifically include an input interface and an output interface. The interface circuit may specifically include an input interface circuit and an output interface circuit. The processing unit 610 may be a processor. The processing unit 610 executes the computer program stored in the storage unit 630, so that the terminal device in which the communication apparatus 600 is installed performs operations and/or processing performed by the terminal device in the method embodiments.

Optionally, the storage unit may be a storage unit in the chip, for example, may be a register or a cache. Alternatively, the storage unit may be a storage unit located in the network device and outside the chip, for example, may be a read-only memory or a random access memory.

In addition, the processing unit 610 may be implemented by hardware, or may be implemented by software. When the processing unit 610 is implemented by hardware, the processing unit 610 may be a logic circuit, an integrated circuit, or the like. When the processing unit 610 is implemented by software, the processing unit 610 may be a general-purpose processor, and is implemented by reading software code stored in the storage unit 630. Optionally, the storage unit 630 may be integrated into the processor, or may exist independently outside the processor.

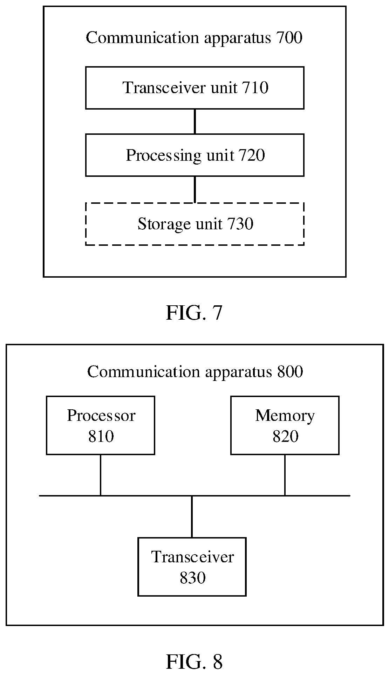

FIG. 7 is a schematic block diagram of a communication apparatus 700 according to this application. As shown in FIG. 7, the communication apparatus 700 includes a transceiver unit 710 and a processing unit 720.

The transceiver unit 710 is configured to receive measurement information of a plurality of paths from a terminal device, where the measurement information includes a relative time difference between the plurality of paths and one or more of the following information: one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

The processing unit 720 is configured to perform positioning on the terminal device based on the measurement information.

Optionally, the transceiver unit 710 is further configured to send a positioning information request to the terminal device, where the positioning information request carries indication information, and the indication information is used to indicate the terminal device to report the relative time difference between the plurality of paths and the one or more PRS resource identifiers.

Optionally, the transceiver unit 710 may alternatively be replaced with a receiving unit and/or a sending unit.

For example, the transceiver unit 710 may be replaced with the receiving unit when performing a receiving step. The transceiver unit 710 may be replaced with the sending unit when performing a sending step.

Optionally, the communication apparatus 700 may further include a storage unit 730. The storage unit 730 is configured to store a computer program executed by the processing unit 720.

In an implementation, the communication apparatus 700 may be the network device in the method embodiments. In this implementation, the transceiver unit 710 may be a transceiver. The transceiver may include a receiver and a transmitter, and has both receiving and transmitting functions. The processing unit 720 may be a processor. The storage unit 730 may be a memory, and is configured to store the computer program. The processing unit 720 executes the computer program stored in the storage unit 730, so that the communication apparatus 700 performs operations and/or processing performed by the terminal device in the method embodiments.

In another implementation, the communication apparatus 700 may be a chip installed in the network device. In this implementation, the transceiver unit 710 may be a communication interface or an interface circuit. The communication interface may specifically include an input interface and an output interface. The interface circuit may specifically include an input interface circuit and an output interface circuit. The processing unit 720 may be a processor. A memory executes the computer program stored in the storage unit 730, so that the network device in which the communication apparatus 700 is installed performs processing and/or operations performed by the network device in the method embodiments.

In addition, the processing unit 720 may be implemented by hardware, or may be implemented by software. When the processing unit 720 is implemented by hardware, the processing unit 720 may be a logic circuit, an integrated circuit, or the like. When the processing unit 720 is implemented by software, the processing unit 720 may be a general-purpose processor, and is implemented by reading software code stored in the storage unit 730. Optionally, the storage unit 730 may be integrated into the processor, or may exist independently outside the processor.

The following describes a communication device provided in this application.

FIG. 8 is a schematic diagram of a structure of a communication device 800 according to this application. As shown in FIG. 8, the communication apparatus 800 includes one or more processors 810, one or more memories 820, and one or more transceivers 830. The memory 820 is configured to store a computer program. The processor 810 is configured to read and execute the computer program stored in the memory 820, and control the transceiver 830 to send and receive a signal, so that the communication device 800 performs a procedure and/or operations performed by the terminal device in the positioning method provided in this application.

The processor 810 may have a function of the processing unit 610 in FIG. 6, and the transceiver 830 may have a function of the transceiver unit 620 in FIG. 6. For details, refer to the description in FIG. 6. The details are not described herein again.

For example, the processor 810 is configured to measure a PRS. The transceiver 830 is configured to send measurement information to a network device. The transceiver 830 is further configured to receive a positioning information request from the network device.

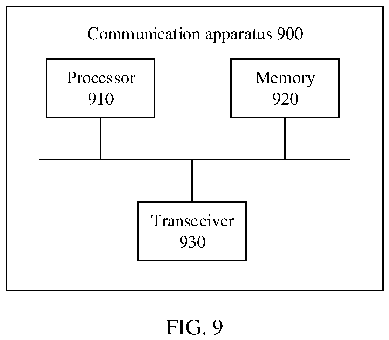

FIG. 9 is a schematic diagram of a structure of a communication device 900 according to this application. As shown in FIG. 9, the communication apparatus 900 includes one or more processors 910, one or more memories 920, and one or more transceivers 930. The memory 920 is configured to store a computer program. The processor 910 is configured to read and execute the computer program stored in the memory 920, and control the transceiver 930 to send and receive a signal, so that the communication device 900 performs a procedure and/or operations performed by the network device in the positioning method provided in this application.

For example, the processor 910 may have a function of the processing unit 720 in FIG. 7, and the transceiver 930 may have a function of the transceiver unit 710 in FIG. 7. For details, refer to the description in FIG. 7. The details are not described herein again.

For example, the processor 910 is configured to perform positioning on a terminal device based on measurement information reported by the terminal device. The transceiver 930 is configured to receive the measurement information from the terminal device. The transceiver 930 is further configured to send a positioning information request to the terminal device.

It should be understood that division into the foregoing units is merely function division, and there may be another division manner in an actual implementation.

Moreover, this application further provides a computer-readable storage medium. The computer-readable storage medium stores computer instructions. When the computer instructions are run on a computer, the computer is enabled to perform operations and/or a procedure performed by the terminal device in the positioning method provided in this application.

This application further provides a computer-readable storage medium. The computer-readable storage medium stores computer instructions. When the computer instructions are run on a computer, the computer is enabled to perform operations and/or a procedure performed by the network device in the positioning method provided in this application.

This application further provides a computer program product. The computer program product includes computer program code. When the computer program code is run on a computer, the computer is enabled to perform operations and/or a procedure performed by the terminal device in the positioning method provided in this application.

This application further provides a computer program product. The computer program product includes computer program code. When the computer program code is run on a computer, the computer is enabled to perform operations and/or a procedure performed by the network device in the positioning method provided in this application.

In addition, this application further provides a chip, and the chip includes a processor. A memory configured to store a computer program is disposed independent of the chip. The processor is configured to execute the computer program stored in the memory, to perform operations and/or processing performed by the terminal device in any method embodiment. Further, the chip may further include a communication interface. The communication interface may be an input/output interface, an input/output circuit, or the like. Further, the chip may further include the memory.

This application further provides a chip, and the chip includes a processor. A memory configured to store a computer program is disposed independent of the chip. The processor is configured to execute the computer program stored in the memory, to perform operations and/or processing performed by the network device in any method embodiment. Further, the chip may further include a communication interface. The communication interface may be an input/output interface, an input/output circuit, or the like. Further, the chip may further include the memory.

In addition, this application further provides a wireless communication system, including the network device (for example, the LMF) and the terminal device described in the embodiments of this application.

The processor in the embodiments of this application may be an integrated circuit or a chip, and has a signal processing capability. In an implementation process, the steps in the foregoing method embodiments may be completed by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor, or the like. The steps in the method disclosed in the embodiments of this application may be directly performed and accomplished by a hardware coding processor, or may be performed and accomplished by a combination of hardware and software modules in a coding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

The memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). The RAM includes but is not limited to a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DRRAM), and the like.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the technical solutions of the embodiments of this application.

In addition, functional units in the embodiments of this application may be integrated into one processing unit, or each of the units may exist alone physically, or two or more units may be integrated into one unit. When the functions are implemented in the form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for enabling a computer device (which may be a personal computer, a server, a network device, or the like) to perform all or some of the steps of the method according to the embodiments of this application. The storage medium includes any medium that can store program code such as a USB flash drive, a removable hard disk, a read-only memory (read-only memory, ROM), a random access memory (random access memory, RAM), a magnetic disk, or an optical disc.

The foregoing description is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
measuring a positioning reference signal PRS to obtain a relative time difference between a plurality of paths; and
sending measurement information of the plurality of paths to a network device, wherein the measurement information comprises the relative time difference between the plurality of paths and one or more of the following information:
one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

2. The method according to claim 1, wherein each of the plurality of paths is associated with one or more PRS resource identifiers.

3. The method according to claim 1 or 2, wherein the method further comprises:
receiving a positioning information request from the network device, wherein the positioning information request carries indication information, and the indication information is used to indicate a terminal device to report the relative time difference between the plurality of paths and the one or more PRS resource identifiers.

4. The method according to claim 2 or 3, wherein when a first path in the plurality of paths is associated with one PRS resource identifier, the PRS resource identifier is used to indicate that a reference signal received power RSRP or reference signal received quality RSRQ that is of the first path and that is measured on a beam corresponding to the PRS resource identifier is the largest, wherein the first path is any one of the plurality of paths.

5. The method according to any one of claims 2 to 4, wherein when a second path in the plurality of paths is associated with a plurality of PRS resource identifiers, the PRS resource identifiers are used to indicate that RSRPs or RSRQ of the second path that are/is measured on beams corresponding to the plurality of PRS resource identifiers are/is larger than an RSRP or RSRQ measured on another beam, wherein the second path is any one of the plurality of paths.

6. A positioning method, comprising:
receiving measurement information of a plurality of paths from a terminal device, wherein the measurement information comprises a relative time difference between the plurality of paths and one or more of the following information: one or more PRS resource identifiers, a direction of a horizontal angle of a transmit beam of a PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS; and
performing positioning on the terminal device based on the measurement information.

7. The method according to claim 6, wherein each of the plurality of paths is associated with one or more PRS resource identifiers.

8. The method according to claim 6 or 7, wherein before the receiving measurement information of a plurality of paths from a terminal device, the method further comprises: sending a positioning information request to the terminal device, wherein the positioning information request carries indication information, and the indication information is used to indicate the terminal device to report the relative time difference between the plurality of paths and the one or more PRS resource identifiers.

9. The method according to claim 7 or 8, wherein when a first path in the plurality of paths is associated with one PRS resource identifier, the PRS resource identifier is used to indicate that an RSRP or RSRQ that is of the first path and that is measured on a beam corresponding to the PRS resource identifier is the largest, wherein the first path is any one of the plurality of paths.

10. The method according to any one of claims 7 to 9, wherein when a second path in the plurality of paths is associated with a plurality of PRS resource identifiers, the PRS resource identifiers are used to indicate that RSRPs or RSRQ of the second path that are/is measured on beams corresponding to the plurality of PRS resource identifiers are/is larger than an RSRP or RSRQ measured on another beam, wherein the second path is any one of the plurality of paths.

11. A communication apparatus, comprising:
a processing unit, configured to measure a positioning reference signal PRS to obtain a relative time difference between a plurality of paths; and
a transceiver unit, configured to send measurement information of the plurality of paths to a network device, wherein the measurement information comprises the relative time difference between the plurality of paths and one or more of the following information:
one or more PRS resource identifiers, a direction of a horizontal angle of a transmit beam of the PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS.

12. The communication apparatus according to claim 11, wherein each of the plurality of paths is associated with one or more PRS resource identifiers.

13. The communication apparatus according to claim 11 or 12, wherein the transceiver unit is further configured to:
receive a positioning information request from the network device, wherein the positioning information request carries indication information, and the indication information is used to indicate a terminal device to report the relative time difference between the plurality of paths and the one or more PRS resource identifiers.

14. The communication apparatus according to claim 12 or 13, wherein when a first path in the plurality of paths is associated with one PRS resource identifier, the PRS resource identifier is used to indicate that an RSRP or RSRQ that is of the first path and that is measured on a beam corresponding to the PRS resource identifier is the largest, wherein the first path is any one of the plurality of paths.

15. The communication apparatus according to any one of claims 12 to 14, wherein when a second path in the plurality of paths is associated with a plurality of PRS resource identifiers, the PRS resource identifiers are used to indicate that RSRPs or RSRQ of the second path that are/is measured on beams corresponding to the plurality of PRS resource identifiers are/is larger than an RSRP or RSRQ measured on another beam, wherein the second path is any one of the plurality of paths.

16. A communication apparatus, comprising:
a transceiver unit, configured to receive measurement information of a plurality of paths from a terminal device, wherein the measurement information comprises a relative time difference between the plurality of paths and one or more of the following information: one or more PRS resource identifiers, a direction of a horizontal angle of a transmit beam of a PRS, a direction of a vertical angle of the transmit beam of the PRS, quality of the horizontal angle of the transmit beam of the PRS, quality of the vertical angle of the transmit beam of the PRS, an identifier ID of the transmit beam of the PRS, and a mode of the transmit beam of the PRS; and
a processing unit, configured to perform positioning on the terminal device based on the measurement information.

17. The communication apparatus according to claim 16, wherein each of the plurality of paths is associated with one or more PRS resource identifiers.

18. The communication apparatus according to claim 16 or 17, wherein the transceiver unit is further configured to:
send a positioning information request to the terminal device, wherein the positioning information request carries indication information, and the indication information is used to indicate the terminal device to report the relative time difference between the plurality of paths and the one or more PRS resource identifiers.

19. The communication apparatus according to claim 17 or 18, wherein when a first path in the plurality of paths is associated with one PRS resource identifier, the PRS resource identifier is used to indicate that an RSRP or RSRQ that is of the first path and that is measured on a beam corresponding to the PRS resource identifier is the largest, wherein the first path is any one of the plurality of paths.

20. The communication apparatus according to any one of claims 17 to 19, wherein when a second path in the plurality of paths is associated with a plurality of PRS resource identifiers, the PRS resource identifiers are used to indicate that RSRPs or RSRQ of the second path that are/is measured on beams corresponding to the plurality of PRS resource identifiers are/is larger than an RSRP or RSRQ measured on another beam, wherein the second path is any one of the plurality of paths.

21. A computer storage medium, comprising a computer program, wherein when the computer program runs on a computer, the computer is enabled to perform the method according to any one of claims 1 to 5, or the computer is enabled to perform the method according to any one of claims 6 to 10.

22. A chip, comprising a processor and a memory, wherein the memory is configured to store a computer program, and the processor is configured to invoke and run the computer program stored in the memory to perform the method according to any one of claims 1 to 5, or perform the method according to any one of claims 6 to 10.

23. A communication system, comprising the communication apparatus according to any one of claims 11 to 15 and the communication apparatus according to any one of claims 16 to 20.
